Europäisches Patentamt

European Patent Office

Office européen des brevets

(11) Veröffentlichungsnummer: **0 205 738**
**B1**

(12) **EUROPÄISCHE PATENTSCHRIFT**

(45) Veröffentlichungstag der Patentschrift: **10.10.90**

(21) Anmeldenummer: **86101952.9**

(22) Anmeldetag: **15.02.86**

(51) Int. Cl.⁵: **B 65 G 35/00, B 24 C 3/10, B 24 C 3/26, B 08 B 3/04**

(54) **Vorrichtung zum kontinuierlichen Fördern und Drehen von Körpern durch eine Bearbeitungskammer.**

(30) Priorität: **19.06.85 CH 2600/85**

(43) Veröffentlichungstag der Anmeldung:
**30.12.86 Patentblatt 86/52**

(45) Bekanntmachung des Hinweises auf die
Patenterteilung:
**·10.10.90 Patentblatt 90/41**

(84) Benannte Vertragsstaaten:
**AT BE CH DE FR GB IT LI NL SE**

(56) Entgegenhaltungen:
**DE-A-1 947 371**
**DE-A-2 035 557**
**FR-A-2 342 924**
**FR-A-2 474 921**
**US-A-1 647 763**

(73) Patentinhaber: **Hunziker, Werner**
**Im Köpfli 262**
**CH-5054 Kirchleerau (CH)**

(72) Erfinder: **Hunziker, Werner**
**Im Köpfli 262**
**CH-5054 Kirchleerau (CH)**

(74) Vertreter: **Fillinger, Peter, Dr.**
**Rütistrasse 1a**
**CH-5400 Baden (CH)**

**Beschreibung**

Die vorliegende Erfindung bezieht sich auf eine Vorrichtung gemäss dem Oberbegriff des Anspruchs 1.

Eine Vorrichtung dieser Art ist aus der DE-A 1 947 371 bekannt. Diese Druckschrift beschreibt nebst einem gummielastischen, rohrförmigen Förderer einen solchen, dessen Mantel aus einer Vielzahl von parallel verlaufenden Stäben oder dgl. ohne gegenseitige Distanzierung gebildet wird. Deren Enden sind an ringförmigen, unter sich parallelen und zur Drehachse geneigten Körpern gelagert. Die Besonderheit an dieser Vorrichtung ist, dass die gegeneinander verschieblichen und aneinander geführten Stäbe keine längsachsiale Bewegung ausführen können, da sie sich beim Drehen des Rohres gegenseitig verklemmen.

Ausgehend von diesem Stand der Technik stellt sich die vorliegende Erfindung die Aufgabe, eine Vorrichtung dieser Art derart zu verbessern, dass die Stäbe oder dgl. sich längsachsial bewegen können, damit Massenteile, wie Kunststoff- und Giessereierzeugnisse unterschiedlicher Grösse kontinuierlich gefördert und gedreht werden können. Diese Aufgabe wird gelöst durch die kennzeichnenden Merkmale des Anspruchs 1.

Anhand von illustrierten Ausführungsbeispielen wird die Erfindung näher beschrieben. Es zeigen:

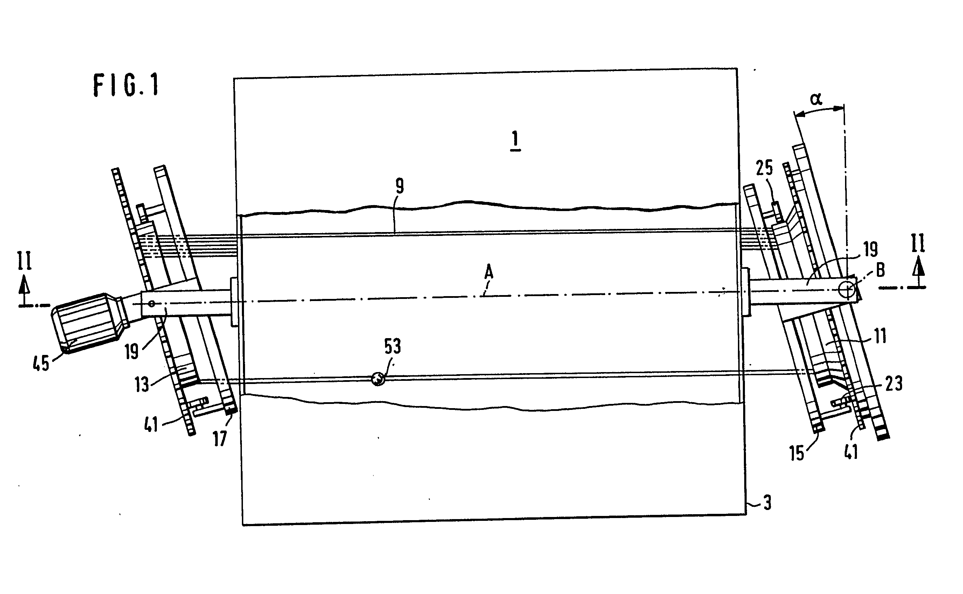

Figur 1 einen Grundriss eines Förderkäfigs in einer Bearbeitungskammer,

Figur 2 einen Längsschnitt durch den Förderkäfig entlang Linie II-II in Figur 1,

Figur 3 ein Spannelement,

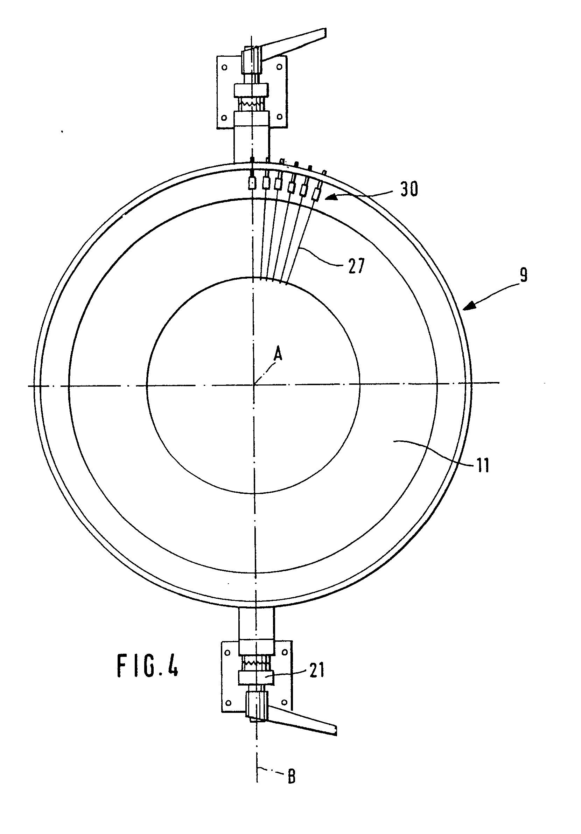

Figur 4 eine Ansicht des Förderkäfigs,

Figur 5 einen Längsschnitt durch ein drittes Ausführungsbeispiel entlang der Linie VII-VII in Figur 8,

Figur 6 eine Draufsicht auf Figur 5,

Figur 7 eine Detailansicht in Richtung des Pfeiles IX in Figur 5,

Figur 8 einen Schnitt längs der Linie X-X,

Figur 9 ein Detail XI in Figur 8 in vergrösserter Darstellung,

Figur 10 die Verbindung zwischen einem Drahtende und einer Lamelle in Explosionsdarstellung und

Figur 11 eine zweite Ausführungsform eines den Käfig bildenden Drahtes.

Die Bearbeitungskammer 1, die eine Strahl-, Abflamm- oder eine Waschanlage enthält, weist ein auf Sockeln 5 stehendes Gehäuse 3 auf, das stirnseitig je mit einer Oeffnung 7 versehen ist.

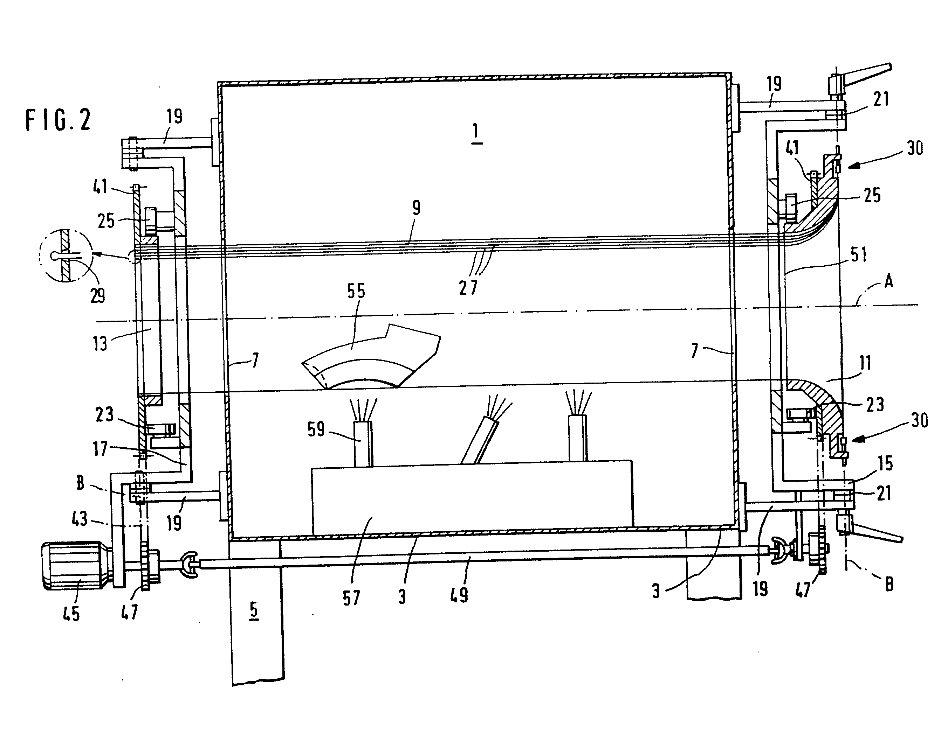

In der Bearbeitungskammer 1, die durch ein Gehäuse 3 begrenzt ist, ist ein um die Achse A drehbar gelagerter Käfig 9 eingesetzt, dessen die Stirnseiten bildenden Endringe 11, 13 ausserhalb der Kammer 1 auf um vertikale Achsen B schwenkbar angeordneten Führungsscheiben 15, 17 abgestützt sind. Die Führungsscheiben 15, 17 sind an Trägern 19 am Gehäuse 1 gelagert und können mittels verzahnten Haltemitteln 21 in verschiedenen Winkeln α zur Achse A eingestellt und gehalten werden. An den Führungsscheiben 15, 17 sind mindestens je drei Rollen 23 befestigt, deren geometrische Achsen sich in einem Punkt auf der Achse A schneiden und drei Rollen 25, deren Achsen rechtwinklig zur Achse B verlaufen. Diese Rollen 23, 25 bilden das Drehlager für die Endringe 11 und 13, die durch den Käfig 9 bildende, an den Endringen 11, 13 befestigte Stäbe, Seile oder Drähte 27 gegeneinander verspannt sind und an die Führungsscheiben 15, 17 herangezogen werden. Die Drähte 27 sind im Endring 13 fest verankert, wobei die Verankerungen vorzugsweise aus kegelförmigen Bohrungen 29 bestehen (siehe Detail in Figur 2), die eine knickfreie Auslenkung in bescheidenem Ausmass zulassen. Im Endring 11 sind die Drähte 27 an einem Spannelement 30 befestigt. Es kann ein Spannelement 30 für jeden einzelnen Draht 27 oder für mehrere Drähte 27 gleichzeitig vorgesehen sein.

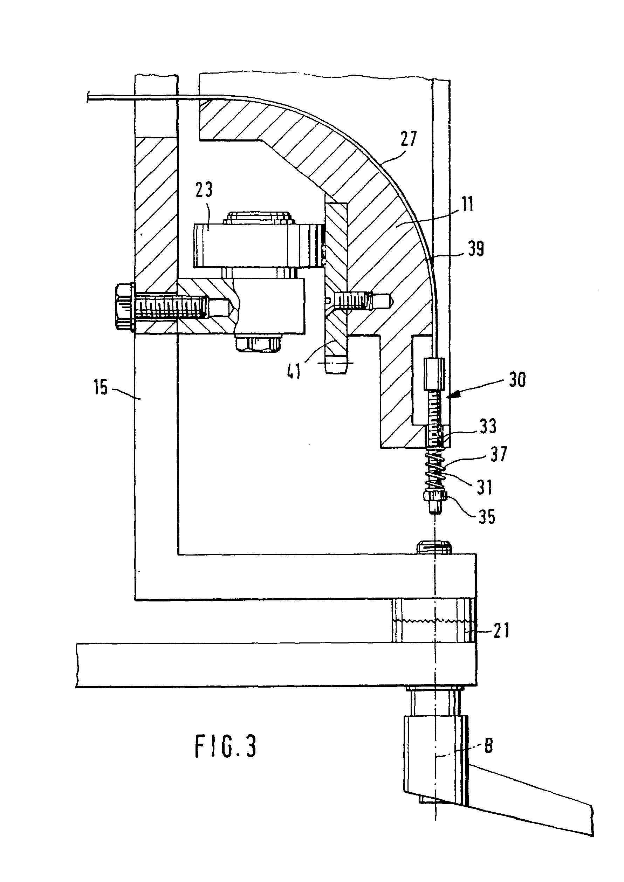

Das Spannelement 30 besteht im wesentlichen aus einem mit dem Draht 27 fest verbundenen Gewindebolzen 31 (Fig. 3), der in einer Bohrung 33 am Endring 11 von einer Schraubenmutter 35 und einer zwischen der Schraubenmutter 35 und dem Endteil 11 eingespannten, den Gewindebolzen 31 umschlingenden Schraubenfeder 37 gehalten wird. Die Drähte 27 liegen auf einer trompetenförmig gekrümmten Fläche 39 des Endteiles 11. An den Endringen 11, 13 sind auf der dem Gehäuse 3 zugekehrten Seite ringförmige Ritzel 41 angebracht, über die je eine Kette oder ein Zahnriemen 43 gelegt ist, der im Eingriff mit von einem Motor 45 angetriebenen Ritzeln 47 steht. Die beiden Ritzel 47 sind durch eine Gelenkwelle 49 kraftschlüssig untereinander verbunden. Die Ritzel 41 können aus gehärtetem Material bestehen und zugleich als Lauffläche für die Rollen 23 dienen.

Die Endringe 11, 13 sind in der Grundstellung parallel zueinander und rechtwinklig zur Achse A ausgerichtet und weisen eine kreisrunde zentrale Öffnung 51 auf, an welcher am Endring 11 die gekrümmte Fläche 39 anschliesst. Die den zylinderförmigen Käfig 9 bildenden Drähte 27 sind parallel zur Drehachse A und in einem gegenseitigen Abstand angeordnet, dessen Betrag der Masse und der Grösse der zu bearbeitenden Werkstücke angepasst ist. Vorzugsweise liegt die von den Drähten oder Seilen 27 gebildete Oberfläche des Käfigs 9 im Bereich von ungefähr 5 bis 20% der gesamten Oberfläche. An den Drähten 27 können Hemmelemente 53, z. B. in Gestalt von aufgepressten Kugeln, befestigt sein, die eine gleichmässige Mitnahme von Werkstücken 55, die sich im Käfig 9 befinden, sicherstellen.

In der Figur 2 ist stellvertretend für ein Bearbeitungsmittel schematisch eine Strahlanlage 57 mit drei Strahldüsen 59 unterhalb dem Käfig 9 im Gehäuse 3 angeordnet, dessen Strahldüsen 59 durch den Käfig 9 hindurch auf das oder die im Käfig 9 liegenden Werkstücke 55 gerichtet sind.

Im folgenden wird die Funktionsweise der Vorrichtung näher erläutert: Das oder die zu bearbeitenden Werkstücke 55 werden von Hand oder mit einer Transportvorrichtung in den Käfig 9 eingebracht. Wenn nun die Endringe 11, 13 senkrecht zur Achse A ausgerichtet sind, so rollen die Werkstücke 55 bei drehendem Käfig 9 in der unteren Hälfte des Käfigs 9 im wesentlichen auf der Stelle, und es erfolgt keine Förderwirkung über die ortsfest angebrachten Strahldüsen 59 hinweg.

Sobald hingegen die beiden Endringe 11, 13 um einige Winkelgrade zur Achse A ausgelenkt werden, bewirkt die axiale Relativbewegung der Drähte 27 einen axialen Vorschub der Werkstücke 55 in der einen oder anderen Richtung, je nach der Drehrichtung und der Lage der Endringe 11, 13. Die Werkstücke 55 können auf diese Weise allseitig und gleichmässig den Strahldüsen 59 ausgesetzt werden. Der Abstand von der Werkstückoberfläche der Strahldüsen 59 bleibt dabei im wesentlichen konstant, unabhängig von der Grösse der Werkstücke, da im wesentlichen nur die auf den Drähten 27 aufliegende, gegen die Strahldüsen 59 gerichtete Oberfläche bearbeitet wird. Mit dem Anstellwinkel der Endringe 11, 13 und der Drehzahl des Käfigs 9 kann nicht nur die Verweilzeit der Werkstücke 55 innerhalb der Bearbeitungskammer 1, sondern auch die Verweilzeit über der jeweiligen Strahldüse eingestellt werden. Letzteres ist besonders wichtig, wenn die Verweilzeit eines Werkstückes 55 aus Kunststoff über einer Flamme kurz gehalten, jedoch einige Male wiederholt werden muss.

Anstelle der Drähte 27 können auch selbsttragende Stäbe verwendet werden.

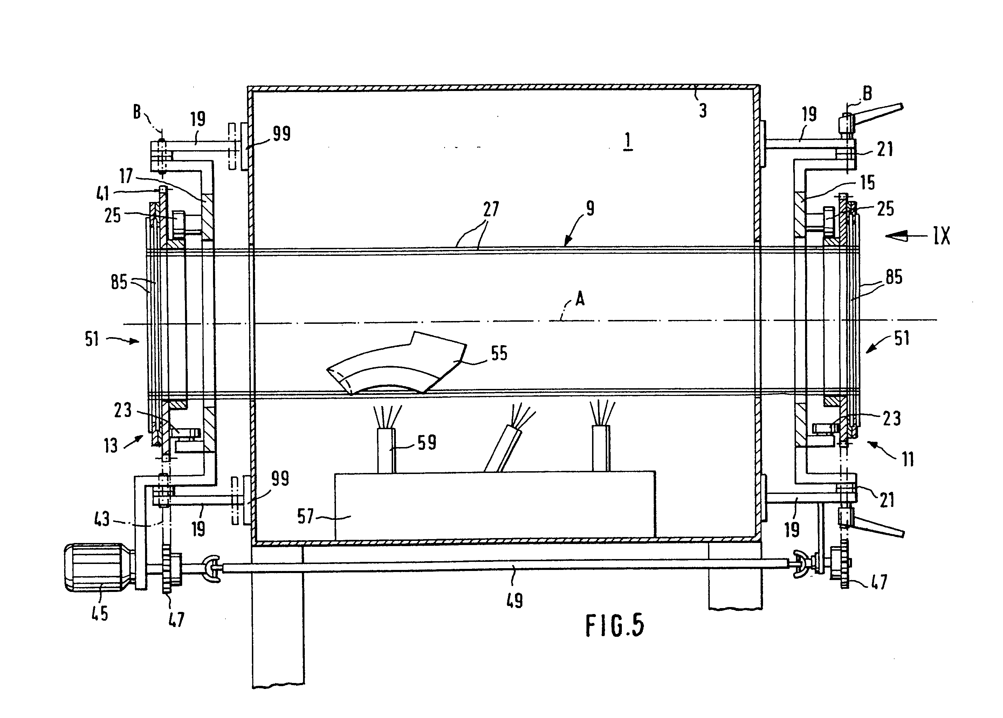

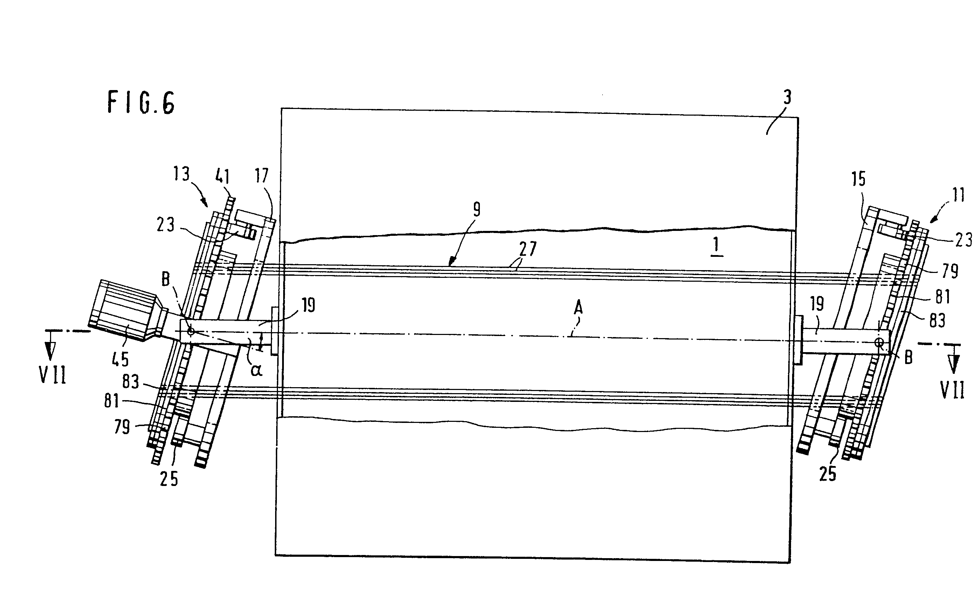

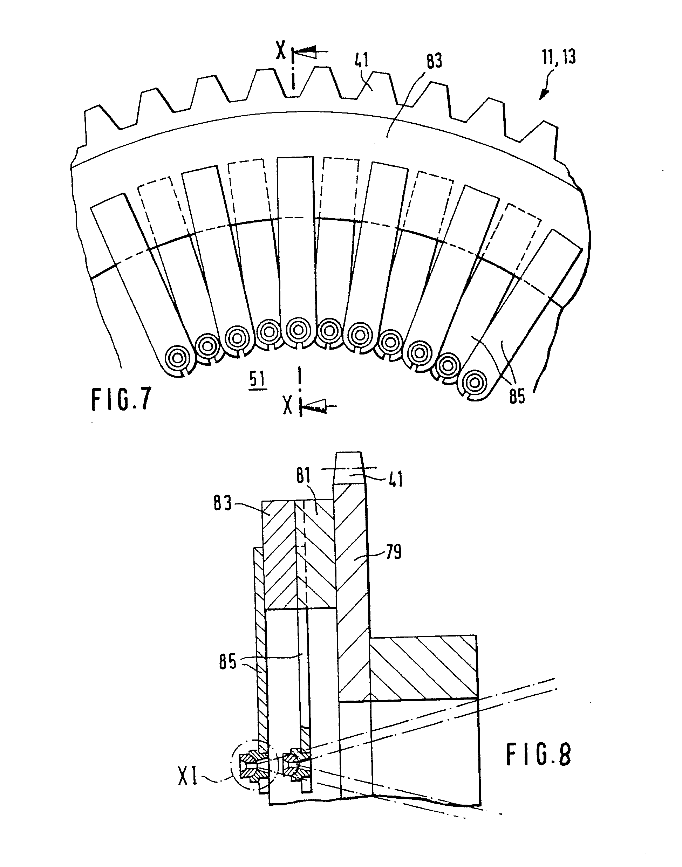

Beim Ausführungsbeispiel nach den Figuren 5 bis 9 sind Teile, die schon bei den vorangehenden Beispielen in gleicher oder äquivalenter Weise vorhanden sind mit den gleichen Hinweisziffern bezeichnet. Auf ihre wiederholende Beschreibung wird daher verzichtet. Bei diesem dritten Ausführungsbeispiel liegt der wesentliche Unterschied in der Ausbildung der Endringe 11, 13 und der Befestigung und Lagerung der Enden der Drähte 27 in diesen Endringen 11, 13. Der Endring 11 ist gleich ausgebildet wie der Endring 13, so dass nachfolgend ihr Aufbau nur mit Bezug auf den Endring 11 beschrieben wird.

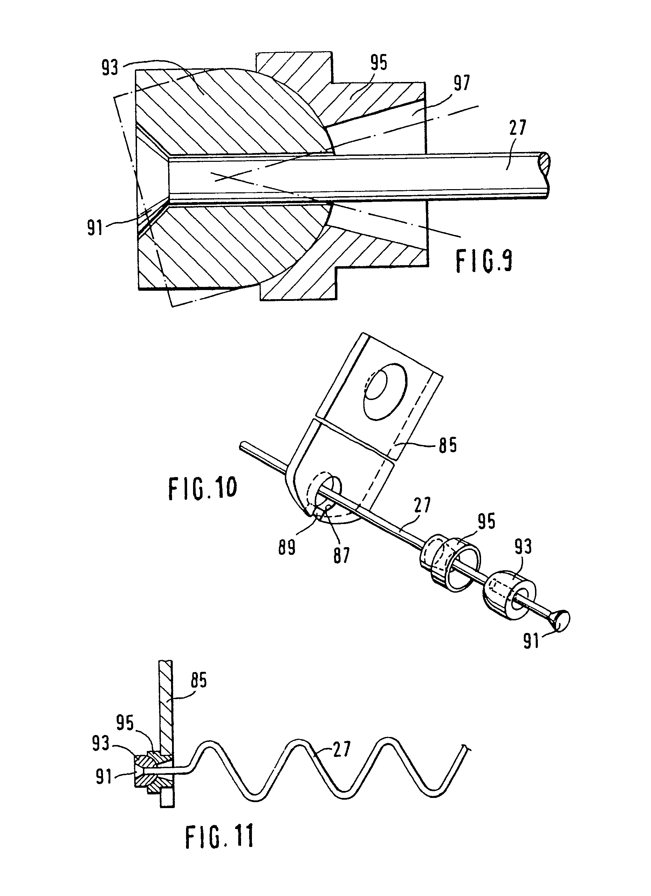

Die Endringe 11, 13 sind mittels den Rollen 23, 25 auf den zugeordneten Führungsscheiben 15, 17 abgestützt und drehbar gelagert. Die Führungsscheiben 15, 17 sind wie bei den vorangehenden Ausführungsbeispielen um die vertikale Achse B schwenk- und feststellbar. Der Endring 11 (wie auch der Endring 13) weist drei miteinander fest verbundene Ringe auf, nämlich, einen im Querschnitt L-förmigen Lagerring 79 mit den Lagerflächen für die Rollen 23, 25 sowie zwei daran befestigte Trägerringe 81 und 83. Wie aus den Figuren 9 und 10 ersichtlich ist, sind an den Trägerringen 81, 83 in radialer Ausrichtung fingerförmige Federlamellen 85 befestigt, an deren freiem Ende die Enden der Drähte 27 gehalten sind. Die am Trägerring 81 befestigten Federlamellen 85 sind gegen jene des Trägerringes 83 derart versetzt, dass die Drähte 27 gegenseitig den gleichen Abstand haben. Wenn der Abstand zwischen benachbarten Drähten 27 vergleichsweise gross sein kann, weil die zu bearbeitenden Werkstücke 55 gross sind, so kann einer der Trägerringe 81 oder 83 enfallen.

Die Federlamellen 85 haben am freien Ende eine Bohrung 87 (Fig. 10) mit einem radial nach aussen führenden Schlitz 89. Die Drähte 27 weisen an beiden Enden materialschlüssig einen konischen Kopf 91 auf, der in einer entsprechenden Ausnehmung eines Glenkkugelteils 93 liegt. Der kalottenförmige Teil von dessen Aussenseite liegt in einer Gelenkpfanne 95 und der Draht 27 ist durch eine konische Durchbrechung 97 in der Gelenkpfanne 95 hindurchgeführt. Dadurch können die Drähte an ihren Enden beim Drehen des Käfigs 9 in dem mit strichpunktierten Linien eingezeichneten Winkelbereich auslenken ohne dabei eine Biegung zu erleiden. Mit den beschriebenen Mitteln ist die Montage und gegebenenfalls auch das Auswechseln der Drähte 27 äusserst einfach. Zuerst werden an einem Ende des Käfigs 9 die auf die Drähte aufgeschobenen Kugelgelenke in die entsprechende Bohrung 87 am Ende einer Federlamelle eingesetzt. Danach wird die gegenüberliegende Federlamelle im Rahmen ihrer elastischen Verformbarkeit leicht eingebogen und das Kugelgelenk des anderen Drahtendes in die Bohrung 87 eingesetzt, wobei der Draht 27 durch den Schlitz 89 hindurch geschoben wird. Nach der Freigabe der eingebogenen Federlamelle federt diese zurück und spannt den Draht 27.

Für das Spannen der Drähte 27 kann auch vorgesehen sein, dass die Lager 99, mit welchen die Führungsscheibe 17 am Gehäuse 3 befestigt ist, relativ zu diesem verschieb- und feststellbar, wie dies in Figur 5 mit strichpunktierten Linien eingezeichnet ist. Bei kurzen Käfigen 9 genügt es, wenn der Motor 45 nur einen der beiden Endringe 11, 13 antreibt. Bei längeren Käfigen 9 kann es indessen zweckmässig sein (in Fig. 5 strichpunktiert gezeigt) beide Endringe über eine in ihrer Länge gegebenenfalls verstellbare Kardanwelle anzutreiben.

Nach einem weiteren Ausführungsbeispiel (Figur 11) sind die Drähte gewendelt und als Schraubenfedern ausgebildet. In dieser Ausführungsform sind sie federelastisch dehnbar und können leicht mit ihren Enden an den Lamellen 85 in der mit Bezug auf die Figuren 10 bis 12 beschriebenen Weise eingehängt werden. Ein elastisch federndes Nachgeben der Lamellen 85 ist bei dieser Drahtform nicht erforderlich.

**Patentansprüche**

1. Vorrichtung zum kontinuierlichen Fördern und Drehen von Werkstücken (55) mit einem um seine Längsachse (A) drehbar gelagerten, rohrförmigen Förderer (9), dessen Mantel aus einer Vielzahl von zur Achse (A) parallel verlaufenden Stäben (27) oder Drähten besteht, deren Enden an ringförmigen, unter sich parallelen und zur Längsachse des Förderers geneigten Körpern (11, 13) gelagert sind, dadurch gekennzeichnet, dass der Förderer durch eine gegenseitige Distanzierung der Stäbe (27) oder Drähte über den ganzen Umfang käfigförmig gestaltet ist und dass bei drehendem Förderer im unten liegenden Bereich die Stäbe in Förderrichtung eine längsachsiale Bewegung ausführen.

2. Vorrichtung nach Anspruch 1, dadurch gekennzeichnet, dass die ringförmigen Körper (11, 13) auf je einer Scheibe (15 bzw. 17) drehbar gelagert sind und die Scheiben (15 bzw. 17) um eine zur Achse (A) senkrecht stehende Achse (B) schwenkbar sind.

3. Vorrichtung nach Anspruch 2, dadurch gekennzeichnet, dass der Winkel (α) der Scheiben (15, 17) zur Achse (A) mit Haltemitteln (21) einstellbar ist.

4. Vorrichtung nach einem der Ansprüche 1 bis 3, dadurch gekennzeichnet, dass zum Antrieb des Käfigs (9) wenigstens an einem der ringförmigen Körpern (11, 13) ein Ritzel (41) angebracht ist, das mit einem Antriebsmotor (45) in kraftschlüssiger Verbindung steht.

5. Vorrichtung nach einem der Ansprüche 1 bis 4, dadurch gekennzeichnet, dass an den Stäben oder Drähten (27) Hemmelemente (53) zur Mitnahme der Werkstücke (55) befestigt sind.

6. Vorrichtung nach Anspruch 1, dadurch gekennzeichnet, dass die Stäbe oder Drähte (27) schraubenförmige Zugfedern sind.

7. Vorrichtung nach einem oder mehreren der Ansprüche 1 bis 6 zum allseitigen Entgraten, Strahlen, Abflammen und/oder Waschen von Werkstücken (55), dadurch gekennzeichnet, dass die Austrittsöffnung (9) einer Mediumquelle unterhalb des Käfigs angeordnet und gegen seinen unten liegenden Bereich gerichtet ist.

8. Vorrichtung nach Anspruch 7, dadurch gekennzeichnet, dass der Abstand der Austrittsöffnung von der Käfigaussenseite einstellbar ist.

9. Vorrichtung nach Anspruch 8, dadurch gekennzeichnet, dass das Druckmedium ein Brenngas-, ein Luft-Strahlmittelgemisch oder ein Waschmittel ist.

**Revendications**

1. Dispositif pour transporter et retourner en continu des pièces à traiter (55) avec un transporteur (9) de forme tubulaire, monté tournant sur son axe longitudinal (A), dont l'enveloppe se compose d'une pluralité de barres (27) ou de fils métalliques, s'étendant parallèlement à l'axe (A), dont les extrémités sont montées sur des corps inclinés (11, 13) de forme annulaire, parallèles entre eux et par rapport à l'axe longitudinal, caractérisé en ce que le transporteur est en forme de cage, due à un espacement réciproque des barres (27) ou fils sur la totalité de la périphérie et que lorsque le transporteur est en rotation, les barres situées dans la zone inférieure exécutent un déplacement longitudinal axial dans le sens du transport.

2. Dispositif selon la revendication 1, caractérisé en ce que les corps de forme annulaire (11, 12) sont montés tournants chacun sur un disque (15, respectivement 17) et les disques (15, respectivement 17) étant pivotants autour d'un axe (B) perpendiculaire à l'axe (A).

3. Dispositif selon la revendication 2, caractérisé en ce que l'angle (α) des disques (15, 17) par rapport à l'axe (A) est réglable à l'aide de moyens de maintien (21).

4. Dispositif selon l'une des revendications 1 à 3, caractérisé en ce que, pour entraîner la cage (9), un pignon (41) relié mécaniquement à un moteur d'entraînement est monté au moins sur l'un des corps (11, 13) de forme annulaire.

5. Dispositif selon l'une des revendications 1 à 4, caractérisé en ce que des éléments de serrage (53) servant à l'entraînement des pièces à usiner (55) sont fixées aux barres ou aux fils (27).

6. Dispositif selon la revendication 1, caractérisé en ce que les barres ou les fils (27) sont des ressorts de traction en forme d'hélice.

7. Dispositif selon l'une des revendications 1 à 6, en vue de l'ébavurage, du grenaillage, du flambage ou du lavage de pièces à usiner (55), caractérisé en ce que l'ouverture de sortie (9) d'une source de fluide est disposée au-dessous de la cage et orientée vers sa zone inférieure.

8. Dispositif selon la revendication 7, caractérisé en ce que la distance entre l'ouverture de sortie et la face extérieure de la cage est réglable.

9. Dispositif selon la revendication 8, caractérisé en ce que le fluide sous pression est un gaz combustible, un mélange d'air et de grenailles, ou un agent de lavage.

**Claims**

1. Device for continuously transporting and turning workpieces (55), having a tubular transporter (9), which is mounted rotatably about its longitudinal axis (A) and the circumferential surface of which consists of a plurality of rods (27) or wires, which run parallel to the axis (A) and the ends of which are mounted on annular bodies (11, 13), parallel to each other and inclined with respect to the longitudinal axis of the transporter, characterized in that the transporter is configured in the form of a cage by a mutual spacing of the rods (27) or wires over the entire circumference, and in that, with the transporter rotating, the rods in the lower-lying region execute a longitudinally axial movement in transporting direction.

2. Device according to Claim 1, characterized in that the annular bodies (11, 13) are each mounted rotatably on a disc (5 and 17 respectively) and the discs (5 and 17 respectively), can swivel about an axis (B) perpendicular to the axis (A).

3. Device according to Claim 2, characterized in that the angle (α) of the discs (15, 17) can be set with respect to the axis (A) by holding means (21).

4. Device according to one of Claims 1 to 3, characterized in that, for driving the cage (9), a pinion (41), which is in non-positive connection with a drive motor (45), is attached to at least one of the annular bodies (11, 13).

5. Device according to one of Claims 1 to 4, characterized in that restraining elements (53) for carrying along the workpieces (55) are fastened to the rods or wires (27).

6. Device according to Claim 1, characterized in that the rods or wires (27) are helical tension springs.

7. Device according to one or more of Claims 1 to 6 for the allround deburring, blasting, flaming and/or washing of workpieces (55), characterized in that the outlet opening (9) of a medium source is arranged underneath the cage and is directed towards its lowerlying region.

8. Device according to Claim 7, characterized in that the distance of the outlet opening from the outside of the cage can be set.

9. Device according to Claim 8, characterized in that the pressure medium is a combustible gas mixture, an air-blasting medium mixture or a washing agent.

FIG.1

FIG.2

2

FIG.3

FIG.4

FIG.5

FIG.6

FIG.7

FIG.8

FIG.9

FIG.10

FIG.11